# EUROPÄISCHE PATENTSCHRIFT

(11) **EP 2 539 183 B1**
(45) Veröffentlichungstag und Bekanntmachung des Hinweises auf die Patenterteilung: **19.03.2014**
(21) Anmeldenummer: 11700338.4
(22) Anmeldetag: 11.01.2011
(51) Int. Cl.: B60R 16/023

(54) **VERFAHREN ZUM ÜBERWACHEN VON FAHRZEUGSYSTEMEN BEI WARTUNGSARBEITEN AM FAHRZEUG**
MONITORING METHOD FOR VEHICLE SYSTEMS DURING THE VEHICLE SERVICING
MÉTHODE DE SURVEILLANCE DE SYSTÈMES DE VÉHICULES LORS DE TRAVAUX DE MAINTENANCE

(30) Priorität: 25.02.2010 DE 102010002328
(43) Veröffentlichungstag der Anmeldung: 02.01.2013
(73) Patentinhaber: Robert Bosch GmbH, 70442 Stuttgart (DE)
(72) Erfinder: WUERTH, Gebhard, 74429 Sulzbach-Laufen (DE); STEPHAN, Thilo, 74080 Heilbronn (DE); KUNZ, Michael, 71711 Steinheim an der Murr (DE); KINDER, Ralf, 71522 Backnang (DE)
(86) Internationale Anmeldenummer: PCT/EP2011/050257
(87) Internationale Veröffentlichungsnummer: WO 2011/104048

(56) Entgegenhaltungen:
- EP-A2- 1 524 628
- WO-A1-00/56574

## Beschreibung

### Stand der Technik

Die Erfindung betrifft ein Verfahren zum Überwachen von Fahrzeugsystemen bei Wartungsarbeiten am Fahrzeug und insbesondere ein Verfahren zur Vermeidung von Fehlermeldungen aufgrund von Wartungsarbeiten.

Bei modernen Fahrzeugen werden insbesondere sicherheitsrelevante Fahrzeugsysteme ständig auf ihre Funktionsfähigkeit hin überwacht. So wird beispielsweise bei einer elektrisch betätigten Bremsanlage (brake-by-wire-Bremsanlage) der Weg eines Bremskolbens und der zugehörige Bremsdruckverlauf überwacht. Wenn sich einer der genannten Betriebsparameter außerhalb eines zulässigen Wertebereichs befindet, oder die Relation der beiden Betriebsparameter zueinander nicht mehr plausibel ist, wird eine Fehlermeldung generiert und der Fehler ggf. akustisch oder optisch angezeigt. Die Überwachung erfolgt i. d. R. mittels einer Sensorik und einer Software, die in einem Steuergerät hinterlegt ist.

Bei Wartungsarbeiten am Fahrzeug, wie z.B. an einer Bremsanlage, ergeben sich üblicherweise Betriebszustände einzelner Komponenten, die außerhalb eines Normbereichs liegen und daher von der Überwachungseinheit als Fehler eingestuft werden. So sind beispielsweise nach einem Bremsbelagwechsel die Bremskolben typischerweise sehr weit in den Bremssattel zurückgeschoben, so dass sich die Bremskraft an den Radbremsen bei einer Betätigung der Betriebsbremsen nur stark verzögert aufbaut. Dies wird von der Überwachungseinheit als Fehler erkannt. Im Falle von Wartungsarbeiten ist dies jedoch nicht erwünscht.

Zur Vermeidung solcher Fehlermeldungen bei bzw. nach Wartungsarbeiten wurden daher speziell angepasste Diagnoseroutinen eingeführt, welche die Wartungsarbeiten unterstützen und ein unerwünschtes Ansprechen der Überwachungseinheiten verhindern sollen. Diese Diagnoseroutinen stehen jedoch für kleine, freie Werkstätten oder Do-it-yourself-Mechaniker häufig nicht zur Verfügung. In diesem Fall hat die Ausführung von Servicearbeiten häufig ein Ansprechen der Überwachungseinheit zur Folge.

Andere Lösungsansätze sehen vor, für bestimmte Servicearbeiten automatische Routinen durchzuführen, die den Werkstattmitarbeiter bei der Ausführung der Servicearbeiten unterstützen und ein Ansprechen der Systemüberwachung verhindern sollen. So kann beispielsweise vorgesehen sein, dass die Bremskolben nach einem Bremsbelagwechsel automatisch in eine vordere Position fahren. Eine unerwünschte Aktivierung dieser automatischen Routinen während des Normalbetriebs kann jedoch sicherheitskritisch sein. Deswegen müssen die automatischen Routinen vom Werkstattmitarbeiter anhand eines genau definierten Ablaufplans aktiviert werden. Dies ist jedoch für den Werkstattmitarbeiter relativ umständlich, so dass die unterstützenden Routinen in vielen Fällen nicht benutzt werden.

EP 1 524 628 offenbart ein Verfahren zum Überwachen der Funktionsfähigkeit eines Fahrzeugsystems.

### Offenbarung der Erfindung

Es ist daher die Aufgabe der vorliegenden Erfindung, ein Verfahren zum Überwachen eines Fahrzeugsystems zu schaffen, das Fehlermeldungen bei Wartungsarbeiten vermeidet und insbesondere keiner zusätzlichen Routinen bedarf.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, den allgemeinen Betriebszustand eines Fahrzeugs sensorisch zu überwachen und festzustellen, ob sich das Fahrzeug in einem Wartungszustand befindet. Falls ein Wartungszustand festgestellt wurde, wird vorgeschlagen, den zulässigen Wertebereich für einen oder mehrere Betriebsparameter des überwachten Fahrzeugsystems zu vergrößern oder die Fehlerlatenzzeit für wenigstens einen Betriebsparameter zu erhöhen. Die Fehlerlatenzzeit ist dabei eine im System hinterlegte Zeitdauer, die der überwachte Betriebsparameter außerhalb eines vorgegebenen Wertebereichs liegen darf, ohne dass eine Fehlermeldung generiert wird. Dadurch ist die Überwachungseinheit unempfindlicher eingestellt und erzeugt erst dann eine Fehlermeldung, wenn der bzw. die überwachten Betriebsparameter auch den erweiterten Wertebereich überschreiten oder länger als die Fehlerlatenzzeit außerhalb des zulässigen Wertebereichs liegen.

Während des Fahrbetriebs eines Fahrzeugs können ggf. Fahrzustände auftreten, die einem Wartungszustand gleichen. In diesem Fall würde es zu einer Fehlerkennung eines Wartungszustands kommen. Um auch im Falle einer solchen Fehlerkennung noch eine ausreichende Sicherheit zu gewährleisten, darf der zulässige Wertebereich nicht zu stark aufgeweitet werden.

Zur Überwachung des Fahrzeugbetriebs in Bezug auf Wartungsarbeiten ist eine geeignete Sensorik vorgesehen. Die Sensorik kann neben verschiedenen fahrzeugeigenen Sensoren, die in den meisten Fahrzeugen standardmäßig verbaut sind, auch Sensoren aufweisen, die direkt an das überwachende System gekoppelt sind. Gemäß einer bevorzugten Ausführungsform der Erfindung wird ein Wartungszustand mittels eines Raddrehzahlsensors, eines Gangpositionssensors oder eines Motor-Drehzahlsensors oder einer beliebigen Kombination dieser Sensoren überwacht. Wahlweise können auch mehr oder weniger oder auch andere Sensoren vorgesehen sein.

Sofern die Betriebsbremsanlage überwacht wird, sind die überwachten Betriebsparameter vorzugsweise ein Bremsdruck, ein Bremskolbenweg und/oder eine Pumpenlaufzeit einer Hydraulikpumpe.

Die Überwachungseinheit kann grundsätzlich überprüfen, ob sich ein oder mehrere Betriebsparameter innerhalb oder außerhalb eines jeweils vorgegebenen Wertebereichs befinden oder ob die Werte mehrerer Betriebsparameter im Verhältnis zueinander plausibel sind oder nicht. So kann beispielsweise überwacht werden, ob ein bestimmter Bremskolbenweg einen bestimmten Druckaufbau zur Folge hat und die jeweiligen Werte im Verhältnis zueinander plausibel sind.

Gemäß einer Ausführungsform der Erfindung wird, sobald ein Wartungszustand festgestellt wurde, wenigstens ein Schwellenwert, der eine Grenze eines zulässigen Wertebereichs darstellt, so verändert, dass sich der Wertebereich aufweitet. Wahlweise oder zusätzlich kann auch die Fehlerlatenzzeit erhöht werden.

Ein Wartungszustand wird vorzugsweise erkannt, wenn mehrere vordefinierte Bedingungen erfüllt sind, wie z.B. wenn der Verbrennungsmotor ausgeschaltet ist, das Fahrzeug mechanisch gehalten wird und die Fahrzeuggeschwindigkeit gleich 0 km/h ist. In diesem Fall wird der Wertebereich wenigstens eines überwachten Betriebsparameters vergrößert oder wenigstens ein Betriebsparameter bei der Überwachung ignoriert. Sofern eine der vorgegebenen Bedingungen nicht oder nicht mehr erfüllt ist, wird der Wertebereich vorzugsweise auf den Normalzustand zurückgesetzt oder der Parameter wieder überwacht. Anzahl und Art der Bedingungen können nach Wunsch vorgegeben werden.

Die Erfindung wird nachstehend anhand der beigefügten Zeichnungen beispielhaft näher erläutert. Es zeigen:
- Fig. 1: eine schematische Blockdarstellung eines Systems zur Überwachung der Funktionsfähigkeit der KFZ-Bremsanlage; und
- Fig. 2: ein Flussdiagramm zur Darstellung einiger Verfahrensschritte bei der Funktionsüberwachung der KFZ-Bremsanlage.

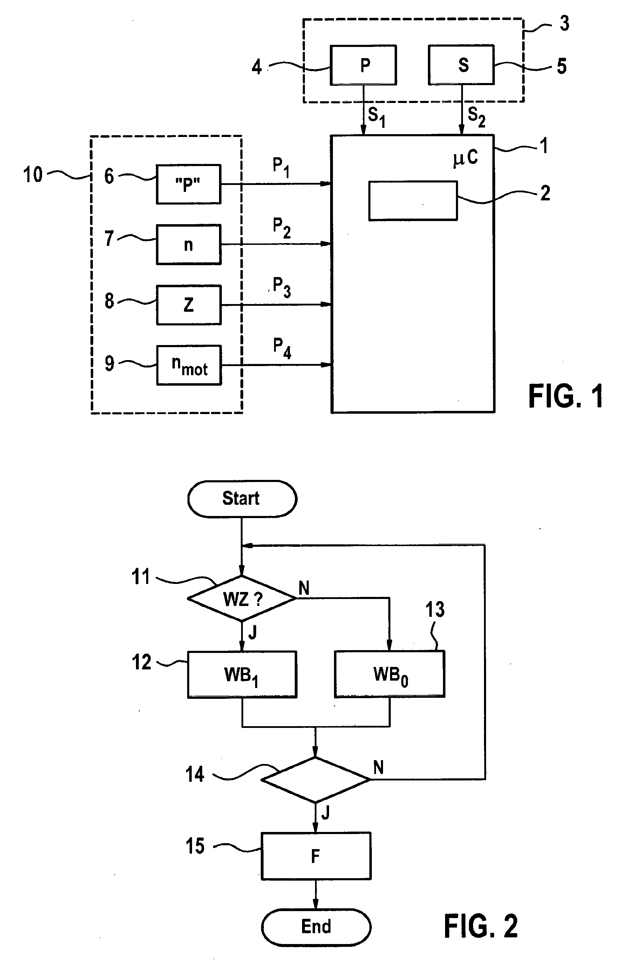

Figur 1 zeigt ein schematisches Blockdiagramm eines Systems zur Überwachung einer hydraulischen KFZ-Bremsanlage 3. Das dargestellte System umfasst eine Überwachungseinheit 1, wie z.B. ein Steuergerät mit einem entsprechenden Algorithmus 2.

An der Überwachungseinheit 1 sind mehrere Sensoren 6-9 angeschlossen, mit denen ein Wartungszustand erkannt werden kann. Im dargestellten Ausführungsbeispiel handelt es sich bei den Sensoren um einen Gangpositionssensor 6, der zumindest die Parkposition "P" bei Automatikfahrzeugen erkennt, einen Raddrehzahlsensor 7, den Zündschalter 8 und einen Motordrehzahlsensor 9. Die Sensoren sind insgesamt mit dem Bezugszeichen 10 gekennzeichnet. Die zugehörigen Sensorsignale P₁-P₄ werden an die Überwachungseinheit 1 übertragen. Wenn der Ganghebel in der Position "P" steht, die Fahrzeuggeschwindigkeit gleich 0 km/h ist und die Zündung aus ist, wird in diesem Fall ein Wartungszustand erkannt. Sofern nur eine der Bedingungen nicht erfüllt ist, wird ein normaler Fahrbetrieb angenommen. Wahlweise könnten auch mehr oder weniger Sensoren, oder auch andere Sensoren genutzt werden, um einen Wartungszustand zu erkennen.

Um die Funktionsfähigkeit der Kfz-Bremsanlage 3 im laufenden Fahrbetrieb zu überwachen, liest die Überwachungseinheit 1 den hydraulischen Bremsdruck p und den Kolbenweg der Bremskolben ein (Signale S₁ und S₂). Die entsprechenden Werte werden von zugehörigen Sensoren 4 und 5 geliefert, die ebenfalls mit der Überwachungseinheit 1 verbunden sind. Die Überwachungseinheit 1 prüft, ob die genannten Werte S₁,S₂ innerhalb eines jeweils vorgegebenen, zulässigen Wertebereichs liegen. Falls einer der Werte außerhalb des vorgegebenen Wertebereichs liegt, wird eine Fehlermeldung generiert. Um dies bei Wartungsarbeiten am Fahrzeug zu vermeiden, wird der jeweils vorgegebene Wertebereich im Falle von Wartungsarbeiten aufgeweitet. Dadurch können unerwünschte Fehlereinträge im Bordcomputer des Fahrzeugs oder Warnmeldungen an den Fahrer verhindert werden.

Fig. 2 zeigt die wesentlichen Verfahrensschritte am Beispiel einer Überwachung der KFZ-Bremsanlage 3. Dabei wird in Schritt 11 mit Hilfe der Sensorik 10 zunächst überprüft, ob sich das Fahrzeug in einem Wartungszustand befindet. Falls ja (J), wird der Wertebereich für wenigstens einen der überwachten Betriebsparameter in Schritt 12 aufgeweitet, oder es wird die Fehlerlatenzzeit für wenigstens eine der überwachten Betriebsparameter erhöht. Falls sich das Fahrzeug in einem normalen Fahrzustand befindet (Fall N), wird eine Standardeinstellung WB₀ für den Wertebereich beibehalten, wie in Schritt 13 dargestellt ist.

In Schritt 14 erfolgt nun die Überwachung eines oder mehrerer Betriebsparameter der Bremsanlage 3. Die überwachten Betriebsparameter können beispielsweise der Bremsdruck, eine Pumpenlaufzeit oder ein Kolbenweg sein. Eine Plausibilitätsprüfung wird vorzugsweise ebenfalls in Schritt 14 durchgeführt. Falls einer der überwachten Betriebsparameter außerhalb des vorgegebenen Wertebereichs liegt (Fall J) wird in Schritt 15 eine Fehlermeldung an den Fahrer ausgegeben und ein Fehlereintrag im Bordcomputer des Fahrzeugs vorgenommen. Falls sich die überwachten Betriebsparameter innerhalb des vorgegebenen Wertebereichs befinden (Fall N) verzweigt das Verfahren zurück zum Start. Da der Wertebereich WB₁ im Falle von Wartungsarbeiten wesentlich größer ist als im normalen Fahrbetrieb, können unerwünschte Fehlermeldungen in der Regel vermieden werden.

## Patentansprüche

1. Verfahren zur Vermeidung von Fehlermeldungen aufgrund von Wartungsarbeiten an einem Fahrzeug, die von einer Überwachungseinheit (1) zum Überwachen der Funktionsfähigkeit eines Fahrzeugsystems (3) generiert werden, wenn sich ein oder mehrere Betriebsparameter des Fahrzeugsystems (3) außerhalb eines vorgegebenen, zulässigen Wertebereichs befinden, **dadurch gekennzeichnet, dass** mittels einer Sensorik (10) überwacht wird, ob sich das Fahrzeug in einem Wartungszustand befindet, und, wenn ein Wartungszustand festgestellt wurde, der zulässige Wertebereich automatisch vergrößert oder eine Fehlerlatenzzeit wenigstens eines Betriebsparameter (S₁, S₂) erhöht wird.

2. Verfahren nach Anspruch 1, **dadurch gekennzeichnet, dass** der Wartungszustand mittels eines oder mehrerer der folgenden Sensoren: einem Raddrehzahlsensor (7), einem Gangpositionssensor (6), einem, einem Zündschalter (8) und/oder Motordrehzahlsensor (9) erkannt wird.

3. Verfahren nach Anspruch 1 oder 2, **dadurch gekennzeichnet, dass** das Fahrzeugsystem (3) eine Bremsanlage eines Kraftfahrzeugs und der wenigstens eine Betriebsparameter (S₁,S₂), ein Bremsdruck und/oder ein Bremskolbenweg und/oder eine Pumpenlaufzeit einer Hydraulikpumpe ist.

4. Verfahren nach einem der vorhergehenden Ansprüche, **dadurch gekennzeichnet, dass** ein Schwellenwert, der eine Grenze des Wertebereichs darstellt, so verändert wird, dass sich der Wertebereich vergrößert.

5. Steuergerät, umfassend Mittel zum Durchführen eines der vorstehend beanspruchten Verfahren.

## Claims

1. Method for avoiding fault messages owing to servicing work on a vehicle, which fault messages are generated by a monitoring unit (1) for monitoring the functional capability of a vehicle system (3) if one or more operating parameters of the vehicle system (3) are outside a predefined permissible value range, **characterized in that** a sensor system (10) monitors whether the vehicle is in a servicing state and if a servicing state has been detected the permissible value range is automatically increased or a fault latency time of at least one operating parameter (S₁, S₂) is increased.

2. Method according to Claim 1, **characterized in that** the servicing state is detected by means of one or more of the following sensors: a wheel speed sensor (7), a gearspeed position sensor (6), an ignition switch (8) and/or an engine speed sensor (9).

3. Method according to Claim 1 or 2, **characterized in that** the vehicle system (3) is a brake system of a motor vehicle, and the at least one operating parameter (S₁, S₂) is a brake pressure and/or a brake piston travel and/or a pump running time of a hydraulic pump.

4. Method according to one of the preceding claims, **characterized in that** a threshold value which represents a boundary of the value range is changed in such a way that the value range is increased.

5. Control device comprising means for carrying out one of the methods claimed above.

## Revendications

1. Procédé destiné à éviter des messages d'erreur dus à des travaux de maintenance sur un véhicule, qui sont générés par une unité de surveillance (1) pour la surveillance de la fonctionnalité d'un système de véhicule (3), lorsqu'un ou plusieurs paramètres de fonctionnement du système de véhicule (3) se trouvent en dehors d'une plage de valeurs admissible prédéfinie, **caractérisé en ce que** la surveillance est réalisée au moyen d'un système de capteurs (10) pour savoir si le véhicule se trouve dans un état de maintenance et si un état de maintenance est constaté, la plage de valeurs admissible est automatiquement élargie ou un temps de latence d'erreur d'au moins un paramètre de fonctionnement (S₁, S₂) est augmenté.

2. Procédé selon la revendication 1, **caractérisé en ce que** l'état de maintenance est détecté au moyen d'un ou de plusieurs des capteurs suivants : un capteur de vitesse de rotation des roues (7), un capteur de position des rapports (6), un interrupteur d'allumage (8) et/ou un capteur de vitesse de rotation du moteur (9).

3. Procédé selon la revendication 1 ou 2, **caractérisé en ce que** le système de véhicule (3) est une installation de freinage d'un véhicule automobile et l'au moins un paramètre de fonctionnement (S₁, S₂) est une pression de freinage et/ou une course du piston de freinage et/ou un temps de fonctionnement de pompe d'une pompe hydraulique.

4. Procédé selon l'une quelconque des revendications précédentes, **caractérisé en ce qu'**une valeur seuil qui représente une limite de la plage de valeurs est modifiée de telle sorte que la plage de valeurs soit élargie.

5. Appareil de commande comprenant des moyens pour mettre en oeuvre un procédé selon les revendications précédentes.
